# EUROPEAN PATENT APPLICATION

(11) **EP 2 295 179 A1**
(43) Date of publication of application: **16.03.2011**
(21) Application number: 09757067.5
(22) Date of filing: 27.05.2009
(51) Int. Cl.: B23D 49/16, B23D 51/16

(54) **RECIPROCATING CUTTING TOOL**

(30) Priority: 05.06.2008 CN 200810123114
(71) Applicant: Positec Power Tools (Suzhou) Co., Ltd., Suzhou 215006 (CN)
(72) Inventor: DUAN, Jiali, Suzhou Jiangsu 215006 (CN)
(74) Representative: Stuttard, Garry Philip
(86) International application number: PCT/CN2009/072015
(87) International publication number: WO 2009/146633

(57) **Abstract**

A reciprocating cutting tool comprises a motor housing; a gear box connected with the motor housing; a motor disposed in the motor housing and a reciprocating mechanism disposed in the gear box. The reciprocating mechanism comprises a suspending rack and a reciprocating shaft driven by the motor. the reciprocating shaft is connected to the motor by a reduction gear and an eccentric shaft. The suspending rack comprises a top plate and a bottom plate; the reciprocating shaft movably connected to the bottom plate, and would not beyond the top plate in a reciprocating direction. Due to the reciprocating shaft is not guided and restricted by the top plate of the suspending rack, the reciprocating shaft would not beyond the top plate during the reciprocating motion. It decreases the height of the gear box greatly, and then the height of the reciprocating cutting tool is decreased. It increases the application ability.

## Description

### TECHNICAL FIELD

The present invention relates to a reciprocating cutting tool, especially relates to a reciprocating mechanism of jig saw.

### BACKGROUND OF THE INVENTION

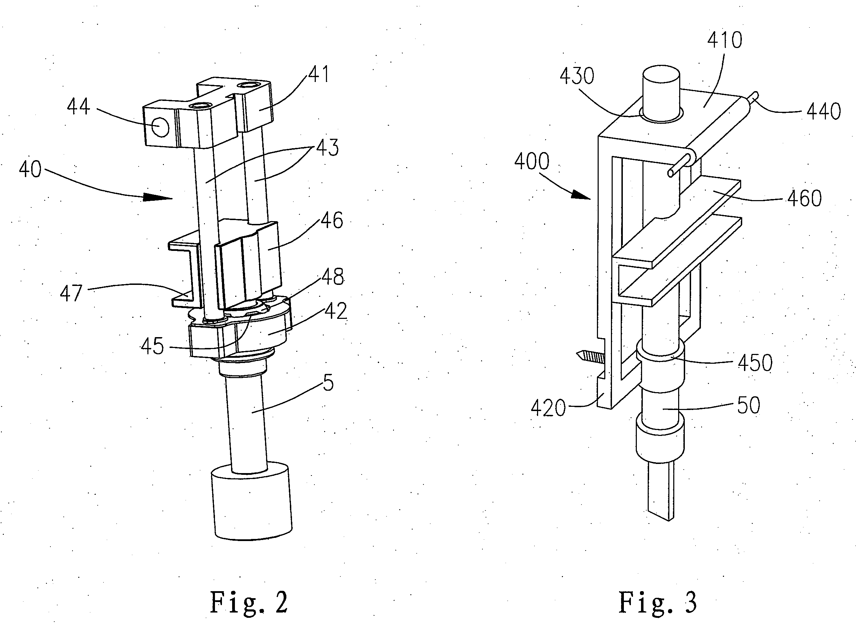

In a Japanese Patent. No. 454801, a reciprocating mechanism of jig saw is disclosed. Refering to FIG 3, the reciprocating mechanism of the jig saw is pivotly connected within the gear box (not shown in the figures). The reciprocating mechanism includes a suspending rack 400 which is pivotly connected to the pivoting shaft 440. The suspending rack 400 includes a top plate 410, a bottom plate 420 and an arm which connects the top plate 410 with the bottom plate 420. Apertures 430 and 450 are respectively disposed in the top plate 410 and the bottom plate 420, for guiding and positioning the positioning shaft 50. the reciprocating shaft 50 connects with a driving block 460 located between the top plate 410 and the bottom plate 420. When the driving block 460 is driven by the gears (not shown in the figure) of the gear box, the reciprocating shaft 50 is driven to move reciprocatly in the vertical direction as shown in Fig 3.

During the reciprocating motion, the reciprocating shaft is guided and restricted by the aperture 430 and the aperture450 on the suspending rack 400. But the reciprocating distance of the reciprocating shaft is long. That means when the block 460 moves at the top of the suspending rack 400, the block 460 touch with the top plate410, the reciprocating shaft 50 will extend out of the aperture 430 for a distance, it will influence the vertical height of the whole reciprocating mechanism, thus the whole height of the jig saw is relative long, the application ability of the jig saw is reduced.

US. Patent No. 6, 625, 892 discloses another reciprocating mechanism of jig saw. The reciprocating mechanism comprises a suspending rack fixed in the gear box. The suspending rack includes two guide rails which is disposed oppositely to each other and extended along the perpendicular direction. A sliding block is connected to the two guide rails. While the sliding block is driven, the sliding block will slide along the guide rails in the perpendicular direction. At the beneath of the sliding block a reciprocating shaft is pivoted connected. When the sliding block slides, the reciprocating shaft will be driven reciprocating in the perpendicular direction. But bicause the reciprocating shaft is less of guiding for the suspending rack, vibration will be generated during operation. Whereas, it is necessary to improve the reciprocating mechanism mentioned above.

### SUMMARY

One object of the present invention is to provide a reciprocating cutting tool with more compact structure and lower vertical height.

In order to realize the above object, the present invention provides a reciprocating cutting tool, comprising: a motor housing; a gear box connected with the motor housing; a motor disposed in the motor housing; a reciprocating mechanism disposed in the gear box, comprising: a suspending rack; a reciprocating shaft driven by the motor; the reciprocating shaft been connected to the motor by a reduction gear and an eccentric shaft; the suspending rack comprises a top plate and a bottom plate; the reciprocating shaft movably connected to the bottom plate, and would not beyond the top plate in a reciprocating direction.

As a further improvement of the above proposal, a through hole is disposed in the bottom plate, the reciprocating shaft passes through the through hole. A ball bearing is disposed between the reciprocating shaft and the through hole.

As a further improvement of the above proposal, a sliding block is connected with a free end of the reciprocating shaft , and a groove extending along a direction perpendicular to the reciprocating direction is disposed in a side of the sliding block, the side of the sliding block faces to the reduction gear, the groove is movably connected to the eccentric shaft. The suspending rack further includes a sliding rail been connected between the top plate and the bottom plate, and the sliding block is movably connected to the sliding rail so that the sliding block is slidable along the sliding rail.

As a further improvement of the above proposal, the top plate is positioned at the top of the gear box, and the bottom plate is positioned at the bottom of the gear box.

As a further improvement of the above proposal, a pivot shaft is disposed on the top plate, the suspending rack is pivotable about the pivot shaft.

Due to the reciprocating shaft of the present invention is not guided and positioned by the top plate of the suspending rack, the reciprocating shaft would not reciprocate beyond the top plate during the reciprocating motion, it decreases the height of the gear box greatly, and then the height of the reciprocating cutting tool is decreased, it increases the application ability.

### BRIEF DESCRIPTION OF THE DRAWINGS

FIG. 1 is a sectional view of the reciprocating cutting tool provided by one embodiment of the present invention;
FIG. 2 is a perspective view of the reciprocating tool mechanism of the reciprocating cutting tool;
FIG. 3 is a perspective view of a reciprocating mechanism provided by the prior art JP454801 disclosed in the background.

Wherein,
1. moter housing; 2. gear box; 3. supporting plate; 4-reciprocating mechanism; 5. reciprocating shaft; 6. blade; 7. roller; 11. motor; 12. motor shaft; 21. reduction gear; 22. eccentric shaft; 40. suspending rack; 41. top plate; 42. bottom pate; 43. sliding rail; 44. pivot shaft; 45. through hole; 46. sliding block; 47. groove; 48. ball bearing; 400. suspending rack; 410. top plate; 420. bottom plate; 430. aperture; 440. pivot shaft; 450 aperture; 460. driving block; 50. reciprocating shaft

### DETAILED EMBODIMENTS

The present invention will be further illustrated by combining with the figures and the detailed embodiments as below.

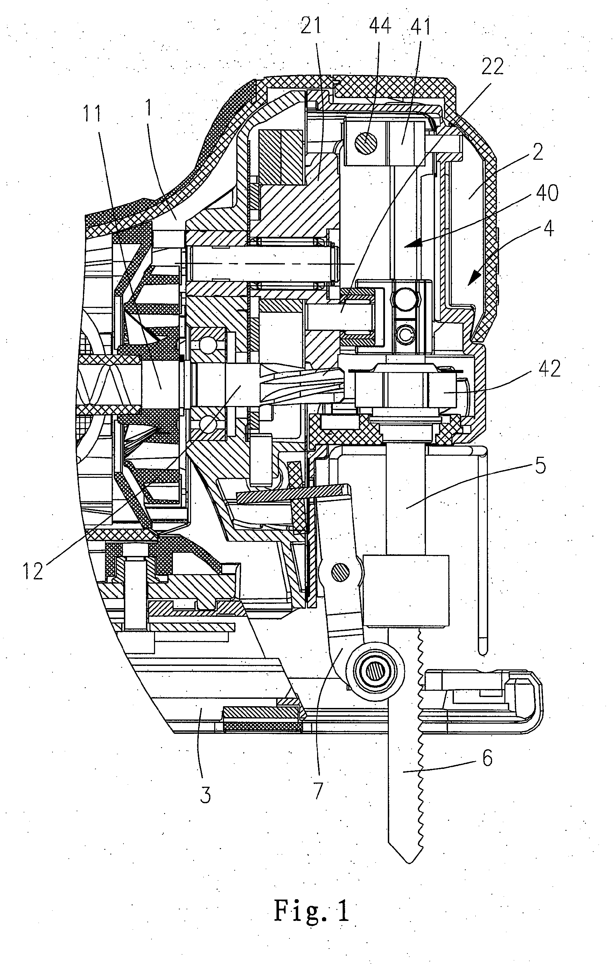

Refering to FIG 1, the present invention provides a reciprocating cutting tool, in a preferred embodiment, the reciprocating cutting tool is a jig saw. The jig saw includes a motor housing 1 which is disposed horizontally, and a vertically disposed gear box 2 which connects to one end of the motor housing 1, and a supporting plate 3 which is under the motor housing 1 to perform a supporting function. Wherein, a motor 11 is disposed in the motor housing 1. The motor 11 has a motor shaft 12 which is meshed with the reduction gear 21 which is disposed in the gear box 2. The motor shaft 12 drives the reduction gear 21 rotating. An eccentric shaft 22 is eccentrically connected to the reduction gear 21, and another end of the eccentric shaft 22 is connected to the reciprocating mechanism 4 which is vertically disposed in the gear box 2. The reciprocating mechanism 4 includes a reciprocating shaft 5. When the reduction gear 21 rotates, the eccentric shaft 22 will rotate eccentrically together with the reduction gear 21, and then will drive the reciprocating shaft 5 reciprocating in the vertical direction. And then it drives the blade 6 mounted on the reciprocating shaft 5 to perform reciprocating cutting operation.

Moreover, a roller 7 is positioned under the gear box 2 and is also driven by the reduction gear 21. The roller 7 contacts the back of the blade 6 and pushes the blade 6 moving towards a direction perpendicular to the reciprocating motion of the blade 6 to perform a orbital operation.

In FIG 2, the reciprocating mechanism 4 includes a suspending rack 40. The suspending rack 40 incudes a top plate 41, a bottom plate 42 and a pair of sliding rails 43 which are disposed between the top plate 41 and the bottom plate 42. Together with reference to FIG 1, the top plate 41 of the suspending rack 40 is positioned at the top of the gear box 2. A pivot shaft 44 is disposed on the top plate 41 so that the suspending rack 40 is pivotable about the pivot shaft 44 within the gear box 2. The bottom plate 42 of the suspending rack 40 is disposed at the bottom of the gear box 2, thus, the vertical height of the gear box 2 is substantially equal to that of the suspending rack 40. Refering to FIG 2, a through hole 45 is disposed in the bottom plate 42 of the suspending rack 40. The reciprocating shaft 5 passes through the through hole 45. The through hole 45 is for guiding and positioning the reciprocating shaft 5. A ball bearing 48 is disposed between the top plate 41 and the bottom plate 42 to make it convenient for the reciprocating shaft 5 sliding. A free end of one portion of the reciprocating shaft 5 which is disposed between the top plate 41 and the bottom plate 42 is connected with a sliding block 46. The sliding block 46 is slidablly connected to the sliding rail 43, so that the sliding block 46 is slidable along the sliding rail 43 up and down. Further more, a groove extending along a direction perpendicular to the reciprocating direction is disposed in a side of the sliding block, The side of the sliding block faces to the reduction gear 21. The groove is movably connected with the eccentric shaft 22 by inserting with the eccentric shaft 22 of the reduction gear 21. The sliding block 46 is eccentrically driven by the reduction gear 21 to slide up and down along the sliding rail 43, and then it drives the reciprocating shaft 5 and the blade 6 which is mounted on the end of the reciprocating shaft 5 moving reciprocatively to perform cutting operation.

It should be noted that, movement of the sliding block 46 is limited between the top plate 41 and the bottom plate 42. Thus, when the sliding block 46 slides to touch with the bottom plate 42, the reciprocating shaft 5 drives the blade 6 to reach the maximum vertical distance with respect to the gear box 2. At this time extending portion of the reciprocating shaft 5 which is beyond the bottom plate 42 of the suspended rack 40 is nearly zero. When the sliding block 46 slides to touch with the top plate 41, the reciprocating shaft 5 drives the blade 6 to reach the most minimum vertical distance. At this time, the reciprocating shaft 5 would extend out of the bottom plate 42, but the reciprocating shaft 5 still would not extent out of the top plate 41. Thus the height of the gear box 2 is decreased. It is convenient to be used by the operator.

## Claims

1. A reciprocating cutting tool, comprising:
a motor housing;
a gear box connected with the motor housing;
a motor disposed in the motor housing; and
a reciprocating mechanism disposed in the gear box, comprising:
a suspending rack;
a reciprocating shaft driven by the motor; the reciprocating shaft been connected to the motor by a reduction gear and an eccentric shaft;
wherein,
the suspending rack comprises a top plate and a bottom plate; the reciprocating shaft is movably connected to the bottom plate, and would not beyond the top plate in a reciprocating direction.

2. The reciprocating cutting tool of claim 1, wherein a through hole is disposed in the bottom plate, the reciprocating shaft passes through the through hole.

3. The reciprocating cutting tool of claim 2, wherein a ball bearing is disposed between the reciprocating shaft and the through hole.

4. The reciprocating cutting tool of claim 1, wherein a sliding block is connected with a free end of the reciprocating shaft a groove extending along a direction perpendicular to the reciprocating direction is disposed in a side of the sliding block, the side of the sliding block faces toward the reduction gear, the groove is movably connected to the eccentric shaft.

5. The reciprocating cutting tool of claim 4, wherein the suspending rack further includes a sliding rail been connected between the top plate and the bottom plate, the sliding block is movably connected to the sliding rail so that the sliding block is slidable along the sliding rail.

6. The reciprocating cutting tool of claim 1, wherein the top plate is positioned at the top of the gear box, the bottom plate is positioned at the bottom of the gear box.

7. The reciprocating cutting tool of claim 1, wherein a pivot shaft is disposed on the top plate, the suspending rack is pivotable about the pivot shaft.

8. A reciprocating cutting tool, comprising:
a motor housing;
a gear box connected with the motor housing;
a motor disposed in the motor housing; and
a speed reduction mechanism, a reciprocating mechanism and a reciprocating driving mechanism being disposed in the gear box, the reciprocating driving mechanism being disposed between the speed reduction mechanism and the reciprocating mechanism, the reciprocating mechanism comprising:
a suspending rack vertically arranged in the gear box;
a reciprocating rod extenting out of the gear box and being limited to be vertically movable with respect to the suspending rack;
the reciprocating shaft transforming the rotation of the motor to a reciprocating motion by the speed reduction mechanism and the reciprocating driving mechanism;
wherein the reciprocating shaft would not reciprocate beyond the top of the suspending rack.

9. The reciprocating cutting tool of claim 8, wherein the suspending rack further comprises a top plate and a bottom plate, a through hole is disposed in the bottom plate, the reciprocating shaft passes through the through hole.

10. The reciprocating cutting tool of claim 9, wherein a ball bearing is disposed between the reciprocating shaft and the through hole.

11. The reciprocating cutting tool of claim9, wherein a sliding block is connected with a free end of the reciprocating shaft , a groove extending along a direction perpendicular to the reciprocating direction is disposed in a side of the sliding block, the side of the sliding block faces toward the speed reduction mechanism, the groove is movably connected to the eccentric shaft.

12. The reciprocating cutting tool of claim11, wherein the suspending rack further includes a sliding rail been connected between the top plate and the bottom plate, the sliding block is movably connected to the sliding rail so that the sliding block is slidable along the sliding rail.

13. The reciprocating cutting tool of claim12, wherein the speed reduction mechanism comprises a reduction gear, the reciprocating driving mechanism comprises an eccentric shaft.

14. The reciprocating cutting tool of claim9, wherein the top plate is positioned at the top of the gear box, the bottom plate is positioned at the bottom of the gear box.

15. The reciprocating cutting tool of claim 9, wherein a pivot shaft is disposed on the top plate, the suspending rack is pivotable about the pivot shaft.
